# EUROPEAN PATENT APPLICATION

(11) **EP 4 769 778 A1**
(43) Date of publication of application: **01.07.2026**
(21) Application number: 25851894.3
(22) Date of filing: 30.07.2025
(51) Int. Cl.: H01M 50/383, H01M 50/342, H01M 50/367, H01M 10/6551, H01M 50/178, H01M 50/249

(54) **BATTERY PACK**

(30) Priority: 05.08.2024 KR 20240104040
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR); PARK, Gi-Chan, Daejeon 34122 (KR)
(74) Representative: Plasseraud IP
(86) International application number: PCT/KR2025/011382
(87) International publication number: WO 2026/034893

(57) **Abstract**

Disclosed is a battery pack. The battery pack includes a base plate; a frame installed on the base plate, providing a space therein, and having a bottom plate; and a battery cell positioned inside the frame, and the bottom plate has a first venting hole facing the battery cell.

## Description

### TECHNICAL FIELD

The present disclosure relates to a battery pack.

The present application claims priority to Korean Patent Application No. 10-2024-0104040 filed on August 5, 2024 in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, when a battery pack includes a plurality of battery modules and each battery module includes a plurality of battery cells, it may be vulnerable to a thermal chain reaction between battery modules or between battery cells. For example, when an event such as thermal runaway occurs within a single battery module, the thermal runaway must be suppressed from propagating to other battery modules or other battery cells. If the propagation of thermal runaway between battery modules or battery cells is not properly suppressed, an event occurring in a specific battery module or battery cell may cause a chain thermal reaction in other battery modules or other battery cells, potentially causing an explosion or fire or increasing its scale.

In particular, when an event such as thermal runaway occurs in a single battery module, gas or flame may be randomly discharged to the outside. If the discharge of gas or flame is not properly controlled, the gas or flame may be discharged toward other battery modules, potentially causing a thermal chain reaction in the other battery modules. In particular, a module terminal may be present at the front side of the battery module, and a component such as a module bus bar for electrical connection with other battery modules or battery packs may be present. Therefore, if flame is discharged to the front side of the battery module, the module terminals may be damaged and an electrical short may occur within the battery pack. In addition, since other battery modules may be present at the front side of the battery module, if flame is discharged to the front side of a specific battery module, the discharged flame may be directed to other battery modules, easily causing a fire to spread between battery modules.

If thermal transfer between battery modules or battery cells is not properly controlled, a sudden voltage drop may occur in the battery module or battery pack. This may lead to a sudden shutdown of the device in which the battery module or battery pack is mounted, resulting in unexpected damage. For example, if a voltage drop occurs suddenly in a battery pack while an electric vehicle is in operation, there is no time to move the vehicle to a safe location.

Furthermore, if thermal propagation between battery modules or cells is not properly controlled to cause a sudden fire or explosion, there is a high possibility of causing casualties to the users. For example, when thermal runaway occurs in an electric vehicle, if a certain amount of time is not allowed before a full-blown fire develops, occupants may not be able to safely escape.

### DISCLOSURE

### Technical Problem

Therefore, the present disclosure is designed to solve the problems of the related art, and therefore the present disclosure is directed to providing a battery pack with an improved structure to appropriately control the emission of flame, etc. generated inside a battery module, and a vehicle including the same.

In addition, the present disclosure is directed to providing a structure that may prevent damage to the outer appearance of a battery pack when a thermal event occurs.

In addition, the present disclosure is directed to preventing flame or ignitable particles from being emitted from the outside of the battery pack when a thermal event occurs.

In addition, the present disclosure is directed to providing a structure capable of suppressing heat transmission between battery modules.

In addition, the present disclosure is directed to providing a structure capable of emitting a venting gas and ignitable particles with reduced temperature and energy.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a base plate; a frame installed on the base plate, providing a space therein, and having a bottom plate; and a battery cell positioned inside the frame, wherein the bottom plate has a first venting hole facing the battery cell.

In addition, the battery pack may further comprise a heat transfer member arranged between the battery cell and the bottom plate.

In addition, the battery pack may further comprise a first fireproof sheet located on the bottom plate and configured to cover the first venting hole.

In addition, the base plate may have a groove facing the first venting hole.

In addition, the frame may extend along a front and rear direction, the battery cell may include an accommodation portion extending along the front and rear direction and having an electrode assembly; a rear sealing portion extending rearward from the accommodation portion; and a rear electrode lead extending rearward from the rear sealing portion, and the first venting hole may face the rear sealing portion.

In addition, the battery pack may further comprise a rear venting guide coupled to one side of the rear sealing portion, and a length of the rear venting guide in an upper and lower direction may be greater than a length of the rear sealing portion in the upper and lower direction.

In addition, a lower end of the rear venting guide may be located higher than a lower end of the rear sealing portion.

In addition, the battery cell may further include a front sealing portion extending forward from the accommodation portion; and a front electrode lead extending forward from the front sealing portion, and the battery pack may further comprise a front venting guide coupled to one side of the front sealing portion.

In addition, a length of the front venting guide in an upper and lower direction may be longer than a length of the rear venting guide in the upper and lower direction.

In addition, a length of the front venting guide in an upper and lower direction may be longer than a length of the front sealing portion in the upper and lower direction.

In addition, the battery pack may further comprise an end cover coupled to a rear side of the frame and having a second venting hole.

In addition, the battery pack may further comprise a second fireproof sheet located in front of the end cover and configured to cover the second venting hole.

In addition, the second venting hole may be located at a lower portion of the end cover.

In addition, the second venting hole may be located lower than a lower end of the rear venting guide.

In addition, the battery pack may further comprise a side wall installed on the base plate and facing the end cover.

In addition, the frame may include a top plate positioned above the battery cell, and the battery pack may further comprise a venting guide configured to block the top plate and the end cover from each other.

In another aspect of the present disclosure, there is also provided a vehicle, comprising the battery pack according to the present disclosure.

### Advantageous Effects

According to at least one of the embodiments of the present disclosure, when gas or flame is generated inside the battery pack, the discharge of the gas or flame may be appropriately controlled.

According to at least one of the embodiments of the present disclosure, damage to the outer appearance of a battery pack may be prevented even if a thermal event occurs.

According to at least one of the embodiments of the present disclosure, the electrical safety of the battery pack may be improved.

According to at least one of the embodiments of the present disclosure, propagation of a thermal event within a battery pack may be suppressed.

According to at least one of the embodiments of the present disclosure, a venting gas or ignitable particles with reduced temperature and energy may be discharged.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is an exploded view showing some components of the battery pack of FIG. 1.
FIGS. 3 and 4 are drawings showing the battery module of FIG. 2.
FIG. 5 is an exploded view showing some components of the battery module of FIG. 3.
FIGS. 6 and 7 are drawings showing a battery cell and a rear venting guide.
FIGS. 8 and 9 are drawings showing a battery cell and a front venting guide.
FIG. 10 is a drawing showing the venting of a battery cell.
FIG. 11 is an enlarged view showing some components of FIG. 5.
FIGS. 12 and 13 are drawings showing the coupling of a venting guide and an end cover.
FIGS. 14 and 15 are drawings showing the coupling of a case and a battery module.
FIG. 16 is a cross-sectional view taken along the cutting line A-A' of FIG. 1.
FIG. 17 is an enlarged view showing a portion B of FIG. 16.
FIG. 18 is a diagram showing the change in FIG. 17 when a thermal event occurs.
FIG. 19 is a drawing showing the flow of a venting gas when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

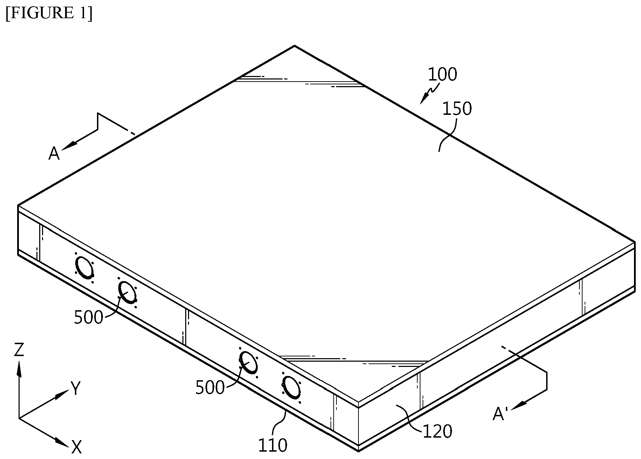

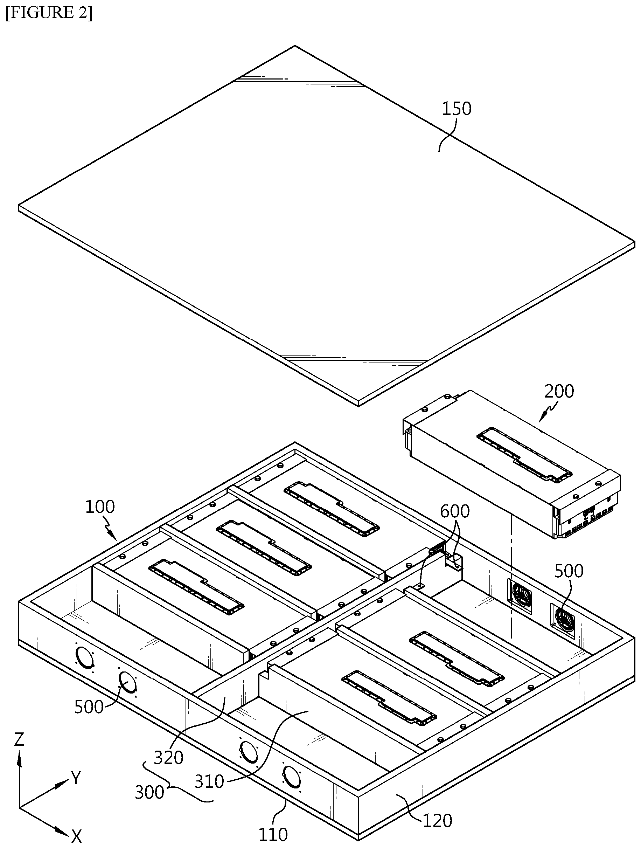

FIG. 1 is a diagram showing a battery pack according to an embodiment of the present disclosure. FIG. 2 is an exploded view showing some components of the battery pack of FIG. 1.

Referring to FIGS. 1 and 2, the battery pack may include a case 100. The case 100 may form an outer appearance of the battery pack 1000. The case 100 may include a base plate 110, a side wall 120 and a pack cover 150. The base plate 110 may have a square shape. The base plate 110 may have a flat plate shape. The base plate 110 may form an outer appearance of the battery pack. The base plate 110 may provide an inner space of the battery pack.

The battery pack may include a pack cover 150. The pack cover 150 may have a square plate shape. The pack cover 150 may have a flat plate shape. The pack cover 150 may form the outer appearance of the battery pack. The pack cover 150 may cover the inner space of the battery pack.

The side wall 120 may be installed, coupled, fastened, or fixed to the upper surface of the base plate 110. The side wall 120 may form the outer appearance of the battery pack.

The battery pack may include a battery module 200. The battery module 200 may be provided in plurality. The battery modules 200 may be installed on the upper surface of the base plate 110.

The battery pack may include a partition wall 300. The partition wall 300 may include a first partition wall 310 and a second partition wall 3230. The partition wall 300 may be provided in plurality. The partition wall 300 may be installed, fastened, fixed, coupled, or attached to the upper surface of the base plate 110. The partition wall 300 may partition an inner space of the battery pack. The battery module 200 or the battery cell 220 may be positioned in the space partitioned by the partition wall 300.

The battery pack may include a venting device 500. The venting device 500 may be installed on the side wall 120. For example, the venting device 500 may be installed on the front side wall 120. For example, the venting device 500 may be a gas valve. The venting device 500 may open to discharge gas when the pressure inside the case 100 increases. In addition, the venting device 500 may block external air from flowing into the case 100. The venting device 500 may be provided in plurality.

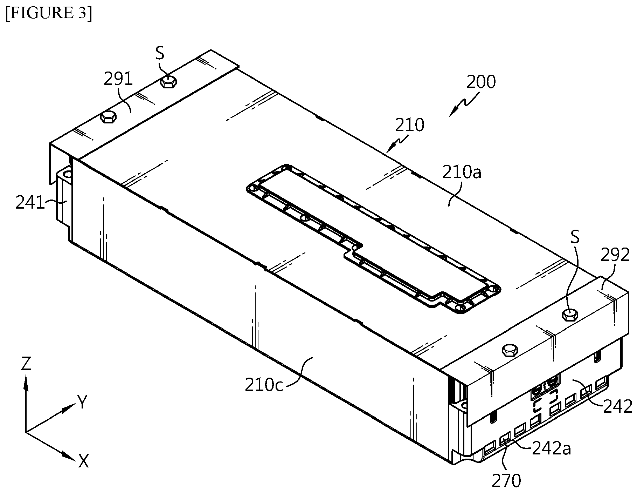

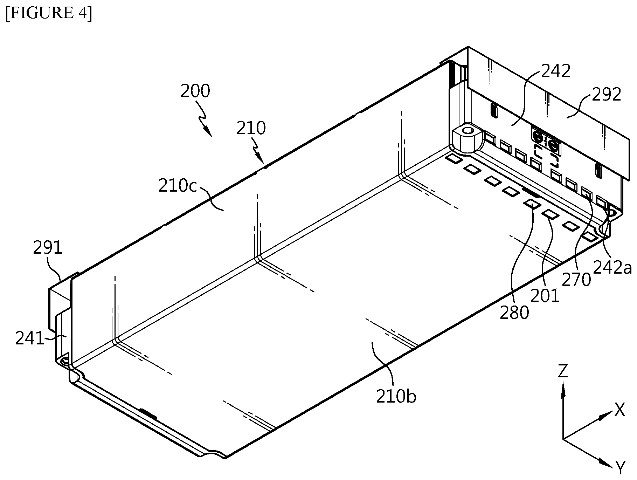

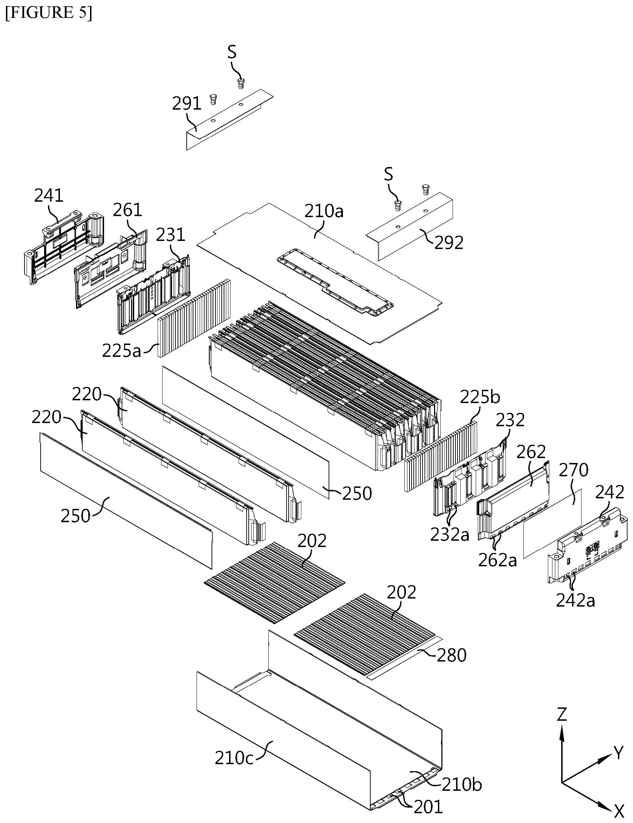

FIGS. 3 and 4 are drawings showing the battery module 200 of FIG. 2. FIG. 5 is an exploded view showing some components of the battery module 200 of FIG. 3.

Referring to FIGS. 3 to 5, the battery module 200 may include a frame 210. The frame 210 may be installed, coupled, fastened, attached, or fixed to the upper surface of the base plate 110. The frame 210 may have a rectangular parallelepiped shape. The frame 210 may provide a space therein. The frame 210 may include a top plate 210a, a bottom plate 210b, and a pair of side plates 210c. The frame 210 may have a front surface and a rear surface opened. The frame 210 may have an opening formed at the front. The frame 210 may have an opening formed at the rear.

The battery cell 220 may be accommodated inside the frame 210. The battery cell 220 may be provided in plurality. The plurality of battery cells 220 may be stacked along the right and left direction or the Y-axis direction.

The battery cell 220 may refer to a secondary battery. In particular, the battery cell 220 may be a pouch-type secondary battery. However, the shape of the battery cell 220 is not limited to a pouch shape, and the battery cell 220 may have various shapes such as a cylindrical shape or a rectangular parallelepiped shape. The battery cell 220 may be provided in plurality.

The bottom plate 210b may have a first venting hole 201. The first venting hole 201 may be formed at the rear side of the bottom plate 210b. The first venting hole 201 may be provided in plurality. The plurality of first venting holes 201 may be arranged along the right and left direction or the Y-axis direction. The first venting hole 201 may be located below the battery cell 220. The first venting hole 201 may face the battery cell 220.

When a thermal event occurs, a venting gas G or ignitable particles discharged from the battery cell 220 may be discharged to the outside of the battery module 200 through the first venting hole 201. The venting gas G or ignitable particles may be discharged downward from the battery module 200 through the first venting hole 201. The venting gas G or ignitable particles may collide with the base plate 110, the first partition wall 310, or the side wall 120. As a result, the energy of the venting gas G or ignitable particles may be reduced, and the temperature may be lowered.

The heat transfer member 202 may be arranged between the battery cell 220 and the bottom plate 210b. The heat transfer member 202 may fix the battery cell 220. For example, the heat transfer member 202 may be a resin having high thermal conductivity.

Referring to FIGS. 3 to 5, the battery module 200 may include a pad 250. The pad 250 may be disposed between the plurality of battery cells 220. The pad 250 may be arranged between at least some of the battery cells 220 and/or at the periphery of the stack. For example, the pad 250 may be configured to be arranged between every two battery cells 220 stacked in the right and left direction.

The pad 250 may contain an elastic material to enable swelling absorption of the battery cell 220. For example, the pad 250 may contain a foam material such as polyurethane. Alternatively, the pad 250 may contain a material capable of blocking heat or flame. For example, the pad 250 may contain with an insulating or fire-retardant material such as silicone or mica.

The battery module 200 may include a front bus bar frame assembly 231. The front bus bar frame assembly 231 may be provided in front of the plurality of battery cells 220. The front bus bar frame assembly 231 may be provided in front of the front venting guide 225a. The front bus bar frame assembly 231 may be electrically connected to the front electrode lead 224a of the plurality of battery cells 220.

The battery module 200 may include a front end cover 241. The front end cover 241 may be coupled to the front of the frame 210. The front end cover 241 may cover the front surface of the frame 210. The front end cover 241 may have a square shape.

The battery module 200 may include a front insulation cover 261. The front insulation cover 261 may be positioned between the front end cover 241 and the front bus bar frame assembly 231. The front insulation cover 261 may electrically insulate the front bus bar frame assembly 231 and the front end cover 241.

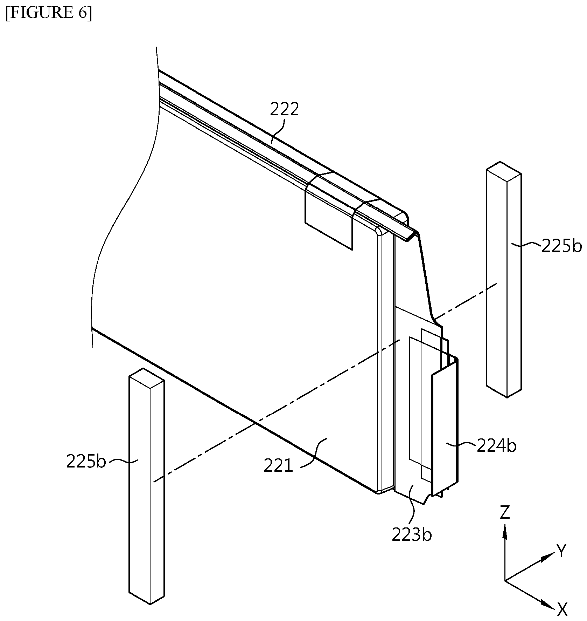

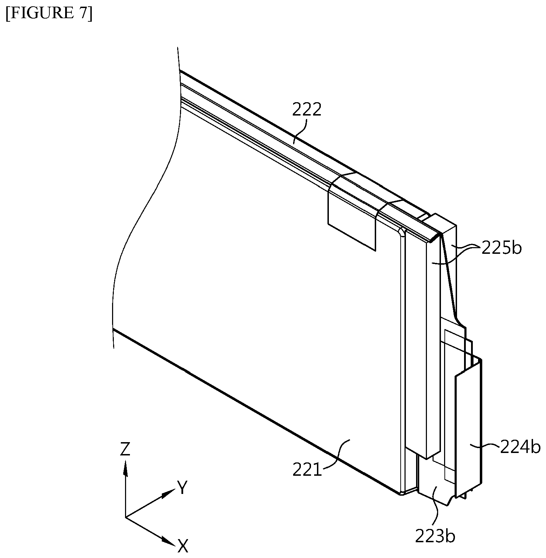

FIGS. 6 and 7 are drawings showing a battery cell 220 and a rear venting guide 225b.

Referring to FIGS. 6 and 7, the battery cell 220 may include an accommodation portion 221 having an electrode assembly. The accommodation portion 221 may extend along the front and rear direction or the X-axis direction. The battery cell 220 may include a rear sealing portion 223b protruding rearward from the accommodation portion 221. The battery cell 220 may include a rear electrode lead 224b protruding rearward from the rear sealing portion 223b. The battery cell 220 may include a top sealing portion 222 extending upward from the accommodation portion 221. The top sealing portion 222 may extend along the front and rear direction or the X-axis direction.

The rear venting guide 225b may be coupled to one side of the rear sealing portion 223b. The rear venting guide 225b may be provided as a pair and may be coupled to both sides of the rear sealing portion 223b. The rear venting guide 225b may be attached to the rear sealing portion 223b. The rear venting guide 225b may extend in the upper and lower direction or the Z-axis direction. The length of the rear venting guide 225b in the upper and lower direction may be shorter than the length of the rear sealing portion 223b in the upper and lower direction. The rear venting guide 225b may be attached to the upper portion of the rear sealing portion 223b. The lower portion of the rear sealing portion 223b may not be coupled with the rear venting guide 225b.

When a thermal event occurs, the rear venting guide 225b may suppress the discharge of the venting gas G or ignitable particles. The rear venting guide 225b may suppress the rear sealing portion 223b from opening or bursting. A region of the rear sealing portion 223b to which the rear venting guide 225b is not attached may open or burst more easily than a region to which the rear venting guide 225b is attached. When a thermal event occurs, the venting gas G or ignitable particles may be discharged from the region of the rear sealing portion 223b to which the rear venting guide 225b is not attached.

The rear venting guide 225b may be provided as a pair for each battery cell 220.

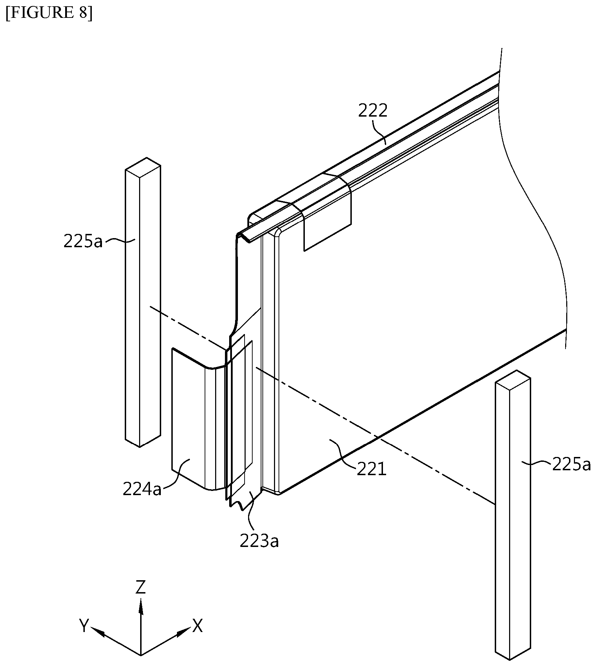

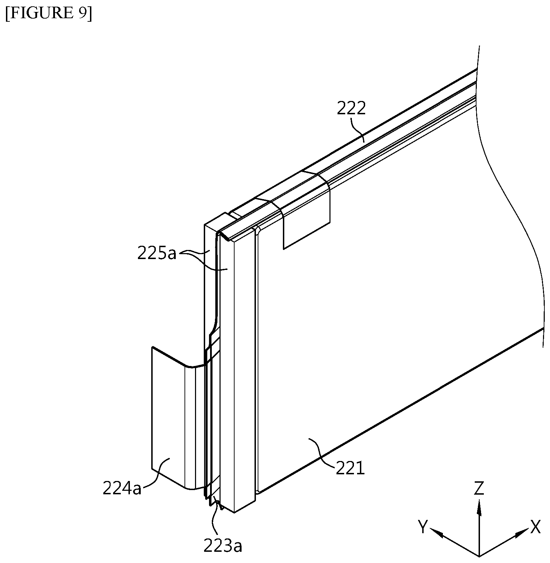

FIGS. 8 and 9 are drawings showing a battery cell 220 and a front venting guide 225a.

Referring to FIGS. 8 and 9, the battery cell 220 may include a front sealing portion 223a protruding forward from the accommodation portion 221. The battery cell 220 may include a front electrode lead 224a protruding forward from the front sealing portion 223a.

The front venting guide 225a may be coupled to one side of the front sealing portion 223a. The front venting guide 225a may be provided as a pair and may be coupled to both sides of the front sealing portion 223a. The front venting guide 225a may be attached to the front sealing portion 223a. The front venting guide 225a may extend in the upper and lower direction or the Z-axis direction. The length of the front venting guide 225a in the upper and lower direction may be substantially the same as the length of the front sealing portion 223a in the upper and lower direction. Alternatively, the length of the front venting guide 225a in the upper and lower direction may be longer than the length of the front sealing portion 223a in the upper and lower direction.

When a thermal event occurs, the front venting guide 225a may suppress the discharge of the venting gas G or ignitable particles. The front venting guide 225a may suppress the front sealing portion 223a from opening or bursting. The rear sealing portion 223b may open or burst more easily than the front sealing portion 223a. When a thermal event occurs, the venting gas G or ignitable particles may not be discharged through the front sealing portion 223a, but may be discharged through a region of the rear sealing portion 223b to which the rear venting guide 225b is not attached. The front venting guide 225a may be provided as a pair for each battery cell 220.

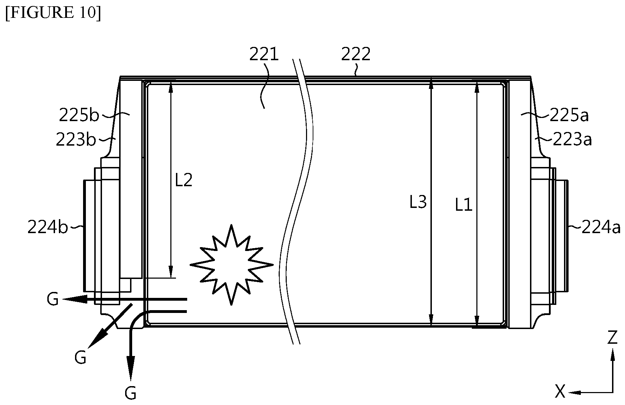

FIG. 10 is a drawing showing the venting of a battery cell 220.

Referring to FIGS. 6 to 10, the length L3 of the front venting guide 225a in the upper and lower direction may be longer than the length L2 of the rear venting guide 225b in the upper and lower direction. Since the front venting guide 225a is formed longer than the rear venting guide 225b, the rear sealing portion 223b may be opened or burst more easily than the front sealing portion 223a. When a thermal event occurs, the venting gas G or ignitable particles may not be discharged through the front sealing portion 223a, but may be discharged through a region of the rear sealing portion 223b to which the rear venting guide 225b is not attached.

The length L2 of the rear venting guide 225b in the upper and lower direction may be shorter than the length L1 of the accommodation portion 221 in the upper and lower direction.

The length L3 of the front venting guide 225a in the upper and lower direction may be substantially the same as the length L1 of the accommodation portion 221 in the upper and lower direction. Alternatively, the length L3 of the front venting guide 225a in the upper and lower direction may be longer than the length L1 of the accommodation portion 221 in the upper and lower direction.

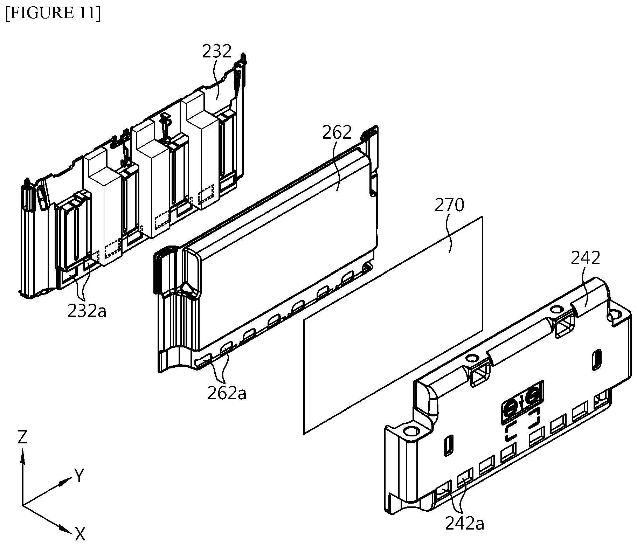

FIG. 11 is an enlarged view showing some components of FIG. 5.

Referring to FIG. 5 and FIG. 11, the battery module 200 may include a rear end cover 242. The rear end cover 242 may be coupled to the rear side of the frame 210. The rear end cover 242 may be coupled to an opening formed at the rear side of the frame 210. The rear end cover 242 may have a second venting hole 242a. The second venting hole 242a may be formed at the lower portion of the rear end cover 242. The second venting hole 242a may be provided in plurality. The plurality of second venting holes 242a may be arranged along the right and left direction or the Y-axis direction.

When a thermal event occurs, the venting gas G or ignitable particles discharged from the battery cell 220 may be discharged to the outside of the battery module 200 through the second venting hole 242a. The venting gas G or ignitable particles may be discharged to the rear of the battery module 200 through the second venting hole 242a. The venting gas G or ignitable particles may collide with the base plate 110, the first partition wall 310, or the side wall 120. As a result, the energy of the venting gas G or ignitable particles may be reduced, and the temperature may be lowered.

The second fireproof sheet 270 may be positioned in front of the rear end cover 242. The second fireproof sheet 270 may cover the second venting hole 242a. The second fireproof sheet 270 may contain a fire-resistant material. The second fireproof sheet 270 may contain a heat-resistant material.

When a thermal event occurs, the venting gas G or ignitable particles discharged from the battery cell 220 may rupture the second fireproof sheet 270 and be discharged to the outside of the battery module 200 through the second venting hole 242a. At this time, only a specific part of the second fireproof sheet 270 where the pressure of the venting gas G is high may be ruptured, and other parts may not be ruptured. As a result, the non-ruptured part of the second fireproof sheet 270 may block the venting gas G or ignitable particles discharged to the outside of the battery module 200 from flowing into the battery module 200.

The battery module 200 may include a rear bus bar frame assembly 232. The rear bus bar frame assembly 232 may be provided at the rear of the plurality of battery cells 220. The rear bus bar frame assembly 232 may be provided at the rear of the rear venting guide 225b. The rear bus bar frame assembly 232 may be electrically connected to the rear electrode leads 224b of the plurality of battery cells 220. The rear bus bar frame assembly 232 may have a fourth venting hole 232a. The fourth venting hole 232a may be formed at the bottom of the rear bus bar frame assembly 232. The fourth venting holes 232a may be provided in plurality. The plurality of fourth venting holes 232a may be arranged along the right and left direction or the Y-axis direction. The plurality of fourth venting holes 232a may be provided in a one-to-one relationship with the plurality of second venting holes 242a. The plurality of fourth venting holes 232a may face the plurality of second venting holes 242a.

The battery module 200 may include a rear insulation cover 262. The rear insulation cover 262 may be positioned between the rear end cover 242 and the rear bus bar frame assembly 232. The rear insulation cover 262 may electrically insulate the rear bus bar frame assembly 232 and the rear end cover 242. The rear insulation cover 262 may have a third venting hole 262a. The third venting hole 262a may be formed at the bottom of the rear insulation cover 262. The third venting hole 262a may be provided in plurality. The plurality of third venting holes 262a may be arranged along the right and left direction or the Y-axis direction. The plurality of third venting holes 262a may be provided in a one-to-one relationship with the plurality of second venting holes 242a. The plurality of third venting holes 262a may face the plurality of second venting holes 242a. The plurality of third venting holes 262a may be provided in a one-to-one relationship with the plurality of fourth venting holes 232a. The plurality of third venting holes 262a may face the plurality of fourth venting holes 232a. A second fireproof sheet 270 may be located between the rear insulation cover 262 and the rear end cover 242. The second fireproof sheet 270 may be fixed between the rear insulation cover 262 and the rear end cover 242. The second fireproof sheet 270 may be coupled, fastened, attached or fixed to the rear insulation cover 262. The second fireproof sheet 270 may be coupled, fastened, attached or fixed to the rear end cover 242.

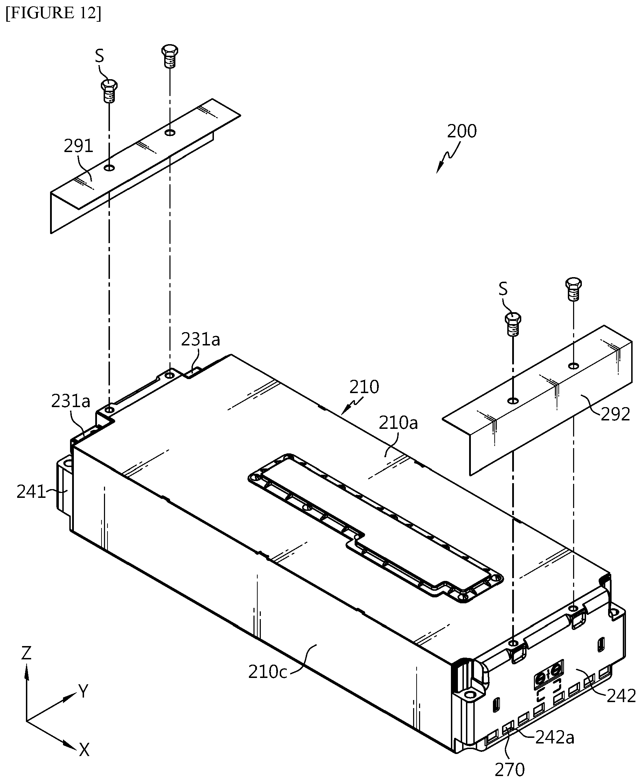

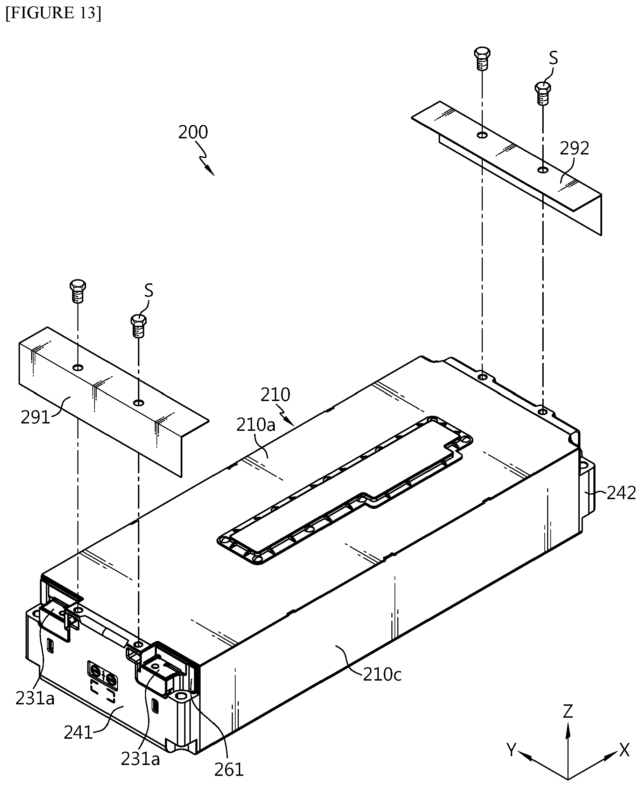

FIGS. 12 and 13 are drawings showing the coupling of a venting guide 291, 292 and an end cover 241, 242.

Referring to FIGS. 2, 12 and 13, the battery module 200 may include a rear venting guide 292. The rear venting guide 292 may cover the space between the top plate 210a and the rear end cover 242. The rear venting guide 292 may be fastened, coupled, fixed, or attached to the rear end cover 242. The fastening member S may fasten the rear venting guide 292 to the rear end cover 242. The rear venting guide 292 may suppress the venting gas G or ignitable particles from being discharged between the rear end cover 242 and the top plate 210a. The rear venting guide 292 may prevent damage to the pack cover 150 due to the discharge of the venting gas G or ignitable particles. The rear venting guide 292 may prevent damage to the outer appearance of the battery pack. The rear venting guide 292 may prevent the venting gas G or ignitable particles from being discharged to the outside of the battery pack.

The battery module 200 may include a front venting guide 291. The front venting guide 291 may cover the space between the top plate 210a and the front end cover 241. The front venting guide 291 may be fastened, coupled, fixed, or attached to the front end cover 241. A fastening member S may fasten the front venting guide 291 to the front end cover 241. The front venting guide 291 may suppress the venting gas G or ignitable particles from being discharged between the front end cover 241 and the top plate 210a. The front venting guide 291 may prevent damage to the pack cover 150 due to the discharge of the venting gas G or ignitable particles. The front venting guide 291 may prevent damage to the outer appearance of the battery pack. The front venting guide 291 may block the venting gas G or ignitable particles from being discharged to the outside of the battery pack.

The battery module 200 may include a power terminal 231a protruding forward from the frame 210. The power terminal 231a may be provided to the front bus bar frame assembly 231. The power terminal 231a may protrude from the front bus bar assembly 231. The power terminal 231a may be provided as a pair. The power terminals 231a may be exposed to the outside of the battery module 200.

The power terminal 231a may be electrically connected to the power terminal 231a of a neighboring battery module 200. The inter bus bar 600 may electrically connect neighboring battery modules 200.

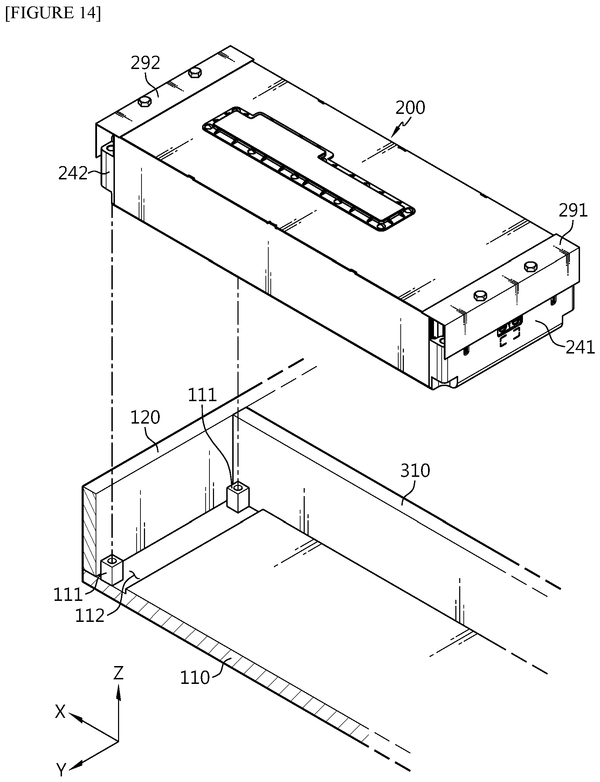

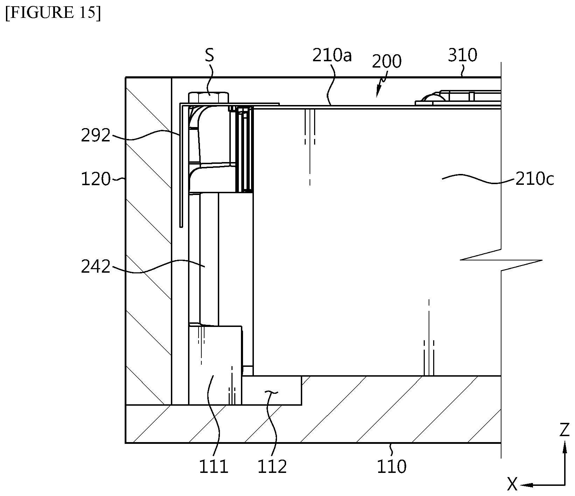

FIGS. 14 and 15 are drawings showing the coupling of a case 100 and a battery module 200.

Referring to FIGS. 14 and 15, the base plate 110 may have a groove 112. The groove 112 may form a step in the downward direction or the -Z-axis direction. The mount 111 may be positioned in the groove 112. The battery module 200 may be fastened, coupled, fixed, or attached to the pair of mounts 111. The groove 112 may form a gap between the base plate 110 and the bottom plate 210b. The side wall 120 may face the rear end cover 242. A gap may be formed between the side wall 120 and the rear end cover 242.

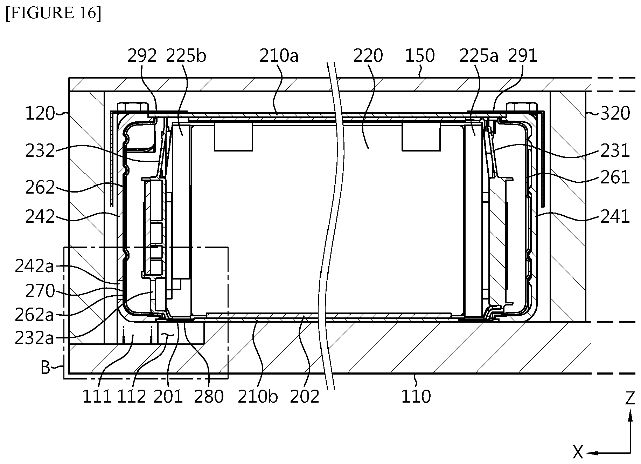

FIG. 16 is a cross-sectional view taken along the cutting line A-A' of FIG. 1.

Referring to FIG. 16, the base plate 110 may face the first venting hole 201. The groove 112 may face the first venting hole 201. The groove 112 may face the first fireproof sheet 280. The groove 112 may form a gap between the base plate 110 and the first venting hole 201. When a thermal event occurs, the venting gas G or ignitable particles discharged through the first venting hole 201 may be accommodated in the groove 112.

The first fireproof sheet 280 may be positioned above the first venting hole 201. The first fireproof sheet 280 may cover the first venting hole 201. The first fireproof sheet 280 may contain a fire-resistant material. The first fireproof sheet 280 may contain a heat-resistant material.

When a thermal event occurs, the venting gas G or ignitable particles discharged from the battery cell 220 may rupture the first fireproof sheet 280 and be discharged to the outside of the battery module 200 through the first venting hole 201. At this time, only a specific part of the first fireproof sheet 280 where the pressure of the venting gas G is high may be ruptured, and other parts may not be ruptured. As a result, the non-ruptured part of the first fireproof sheet 280 may block the venting gas G or ignitable particles discharged to the outside of the battery module 200 from flowing into the battery module 200.

The pack cover 150 may cover the top plate 210a. The pack cover 150 may cover the front venting guide 291. The pack cover 150 may cover the rear venting guide 292. The second partition wall 3230 may face the front end cover 241.

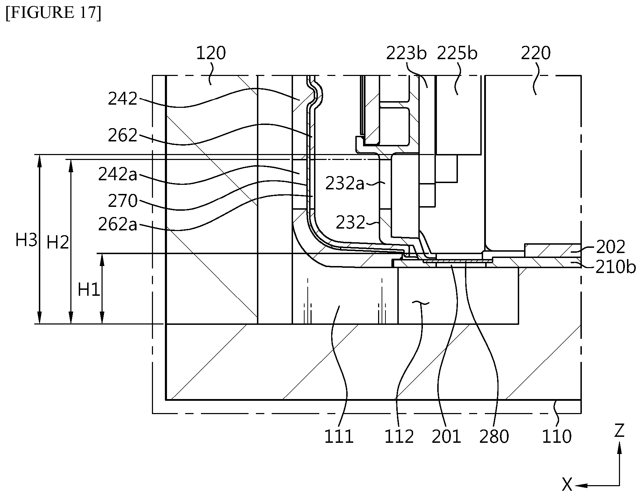

FIG. 17 is an enlarged view showing a portion B of FIG. 16.

Referring to FIG. 17, the first venting hole 201 may face the rear sealing portion 223b. The first venting hole 201 may be located below the rear sealing portion 223b. The first fireproof sheet 280 may be located between the first venting hole 201 and the rear sealing portion 223b. The first fireproof sheet 280 may cover the first venting hole 201.

The fourth venting hole 232a may face the rear sealing portion 223b. The fourth venting hole 232a may be located at the rear of the rear sealing portion 223b. The third venting hole 262a may face the fourth venting hole 232a. The third venting hole 262a may be located at the rear of the fourth venting hole 232a. The second fireproof sheet 270 may cover the third venting hole 262a. The second fireproof sheet 270 may be located between the third venting hole 262a and the second venting hole 242a. The second venting hole 242a may be located at the rear of the second fireproof sheet 270. The second venting hole 242a may face the third venting hole 262a.

The rear venting guide 225b may guide the venting gas G or ignitable particles to be discharged through the lower portion of the rear sealing portion 223b. The lower end of the rear venting guide 225b may be positioned higher than the lower end of the rear sealing portion 223b. The height H3 of the lower end of the rear venting guide 225b may be higher than the height H1 of the lower end of the rear sealing portion 223b.

The rear venting guide 225b may be positioned so as not to obstruct the venting gas G or ignitable particles discharged through the rear sealing portion 223b from being discharged through the fourth venting hole 232a. The height H3 of the lower end of the rear venting guide 225b may be the same as the height H2 of the upper end of the fourth venting hole 232a. Alternatively, the lower end of the rear venting guide 225b may be higher than the fourth venting hole 232a. The height H3 of the lower end of the rear venting guide 225b may be the same as the height H2 of the upper end of the third venting hole 262a. Alternatively, the lower end of the rear venting guide 225b may be higher than the third venting hole 262a. The height H3 of the lower end of the rear venting guide 225b may be the same as the height H2 of the upper end of the second venting hole 242a. Alternatively, the lower end of the rear venting guide 225b may be higher than the second venting hole 242a.

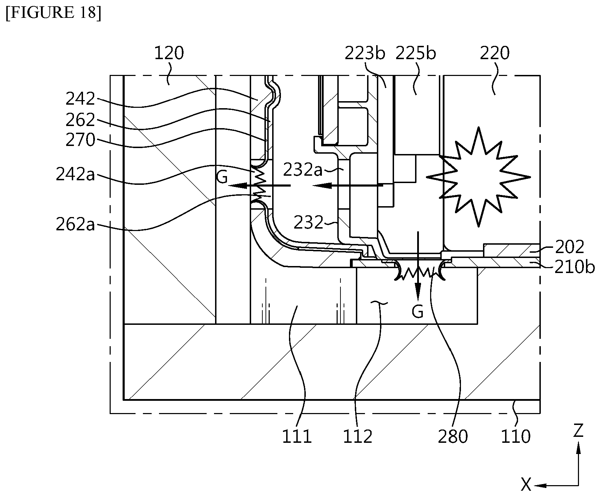

FIG. 18 is a diagram showing the change in FIG. 17 when a thermal event occurs.

Referring to FIG. 18, when a thermal event occurs, the venting gas G or ignitable particles may be discharged through the rear sealing portion 223b. The venting gas G or ignitable particles may rupture the first fireproof sheet 280. The venting gas G or ignitable particles may be discharged to the outside of the battery module 200 through the first venting hole 201. The groove 112 may accommodate the venting gas G or ignitable particles discharged through the first venting hole 201. The groove 112 may provide a space to allow the venting gas G or ignitable particles to be smoothly discharged through the first venting hole 201. The non-ruptured portion of the first fireproof sheet 280 may block the venting gas G or ignitable particles discharged to the outside of the battery module 200 from flowing into the battery module 200.

The venting gas G or ignitable particles may rupture the second fireproof sheet 270. The venting gas G or ignitable particles may be discharged to the outside of the battery module 200 through the fourth venting hole 232a, the third venting hole 262a, and the second venting hole 242a. The space between the side wall 120 and the rear end cover 242 may accommodate the venting gas G or ignitable particles discharged through the fourth venting hole 232a, the third venting hole 262a, and the second venting hole 242a. The space between the side wall 120 and the rear end cover 242 may provide a space so that the venting gas G or ignitable particles may be smoothly discharged through the second venting hole 242a. The non-ruptured portion of the second fireproof sheet 270 may block the venting gas G or ignitable particles discharged to the outside of the battery module 200 from flowing into the battery module 200.

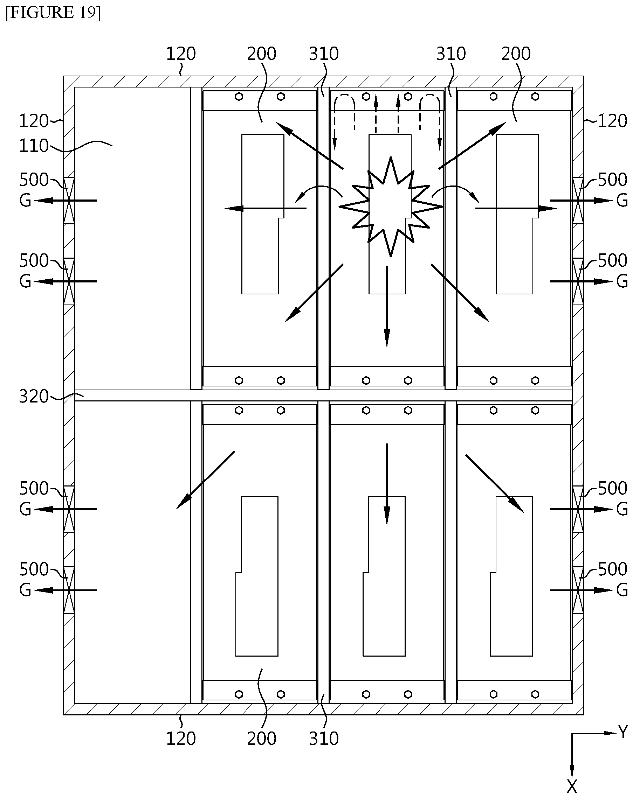

FIG. 19 is a drawing showing the flow of a venting gas G when a thermal event occurs.

Referring to FIG. 19, the venting gas G or ignitable particles discharged through the first venting hole 201 may flow along the space between the battery module 200 and the side wall 120. The venting gas G or ignitable particles discharged through the first venting hole 201 may flow along the space between the battery module 200 and the groove 112. The venting gas G or ignitable particles discharged through the first venting hole 201 may flow along the space between the first partition wall 310 and the battery module 200. In addition, the venting gas G or ignitable particles discharged through the first venting hole 201 may rise upward and be discharged through the venting device 500. As the venting path of the venting gas G or ignitable particles becomes longer, the temperature or energy of the venting gas G or ignitable particles may be reduced.

The venting gas G or ignitable particles discharged through the second venting hole 242a may flow along the space between the battery module 200 and the side wall 120. The venting gas G or ignitable particles discharged through the second venting hole 242a may flow along the space between the battery module 200 and the groove 112. The venting gas G or ignitable particles discharged through the second venting hole 242a may flow along the space between the first partition wall 310 and the battery module 200. Also, the venting gas G or ignitable particles discharged through the second venting hole 242a may rise upward and be discharged through the venting device 500. As the venting path of the venting gas G or ignitable particles becomes longer, the temperature or energy of the venting gas G or ignitable particles may be reduced.

In addition, the battery pack according to the present disclosure may further include various components, for example components of the battery pack known at the time of filing of this application, such as a BMS, a bus bar, a relay, a current sensor, etc. in addition to the battery module 200.

The battery pack according to the present disclosure may be applied to a vehicle, such as an electric vehicle or a hybrid electric vehicle. That is, the vehicle according to the present disclosure may include the battery pack according to the present disclosure. Also, the vehicle according to the present disclosure may further include various other components included in the vehicle in addition to the battery pack. For example, the vehicle according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a base plate;
a frame installed on the base plate, providing a space therein, and having a bottom plate; and
a battery cell positioned inside the frame,
wherein the bottom plate has a first venting hole facing the battery cell.

2. The battery pack according to claim 1, further comprising:
a heat transfer member arranged between the battery cell and the bottom plate.

3. The battery pack according to claim 1, further comprising:
a first fireproof sheet located on the bottom plate and configured to cover the first venting hole.

4. The battery pack according to claim 1,
wherein the base plate has a groove facing the first venting hole.

5. The battery pack according to claim 1,
wherein the frame extends along a front and rear direction,
wherein the battery cell includes:
an accommodation portion extending along the front and rear direction and having an electrode assembly;
a rear sealing portion extending rearward from the accommodation portion; and
a rear electrode lead extending rearward from the rear sealing portion,
wherein the first venting hole faces the rear sealing portion.

6. The battery pack according to claim 5, further comprising:
a rear venting guide coupled to one side of the rear sealing portion,
wherein a length of the rear venting guide in an upper and lower direction is greater than a length of the rear sealing portion in the upper and lower direction.

7. The battery pack according to claim 5,
wherein a lower end of the rear venting guide is located higher than a lower end of the rear sealing portion.

8. The battery pack according to claim 5,
wherein the battery cell further includes:
a front sealing portion extending forward from the accommodation portion; and
a front electrode lead extending forward from the front sealing portion,
wherein the battery pack further comprises a front venting guide coupled to one side of the front sealing portion.

9. The battery pack according to claim 8,
wherein a length of the front venting guide in an upper and lower direction is longer than a length of the rear venting guide in the upper and lower direction.

10. The battery pack according to claim 8,
wherein a length of the front venting guide in an upper and lower direction is longer than a length of the front sealing portion in the upper and lower direction.

11. The battery pack according to claim 6, further comprising:
an end cover coupled to a rear side of the frame and having a second venting hole.

12. The battery pack according to claim 11, further comprising:
a second fireproof sheet located in front of the end cover and configured to cover the second venting hole.

13. The battery pack according to claim 11,
wherein the second venting hole is located at a lower portion of the end cover.

14. The battery pack according to claim 11,
wherein the second venting hole is located lower than a lower end of the rear venting guide.

15. The battery pack according to claim 11, further comprising:
a side wall installed on the base plate and facing the end cover.

16. The battery pack according to claim 11,
wherein the frame includes a top plate positioned above the battery cell, and
wherein the battery pack further comprises a venting guide configured to block the top plate and the end cover from each other.

17. A vehicle comprising the battery pack according to any one of claims 1 to 16.
